# EUROPEAN PATENT SPECIFICATION

(11) **EP 4 195 079 B1**
(45) Date of publication and mention of the grant of the patent: **04.11.2026**
(21) Application number: 22199559.0
(22) Date of filing: 04.10.2022
(51) Int. Cl.: G06F 21/57, G06F 21/70, G06F 21/73, H04L 9/08, G06F 21/72, H04L 9/06, H04L 9/32

(54) **HARDWARE INTEGRITY VERIFICATION MECHANISM**
HARDWAREINTEGRITÄTSVERIFIZIERUNGSMECHANISMUS
MÉCANISME DE VÉRIFICATION D'INTÉGRITÉ DE MATÉRIEL

(30) Priority: 08.12.2021 US 202117545197
(43) Date of publication of application: 14.06.2023
(73) Proprietor: INTEL Corporation, Santa Clara, CA 95054 (US)
(72) Inventor: N, Tajunnisha, 625515 TamilNadu (IN); NAGARAJA, Vasanth, 560023 Bangalore, Karnataka (IN); V, Vasavi, Santa Clara, CA, 95054 (US)
(74) Representative: Viering, Jentschura & Partner mbB Patent- und Rechtsanwälte

(56) References cited:
- DIAMOND TYLER ET AL: "VALIDATING THE INTEGRITY OF COMPUTING DEVICES Supply Chain Assurance", 31 March 2020 (2020-03-31), pages 1 - 14, XP093033743, Retrieved from the Internet <URL:https://www.nccoe.nist.gov/sites/default/files/legacy-files/tpm-sca-project-description-final.pdf> [retrieved on 20230322]
- TCG: "TCG Specification Architecture Overview, Specification Revision 1.2", TCG SPECIFICATION ARCHITECTURE OVERVIEW, TRUSTED COMPUTING GROUP, US, 28 April 2004 (2004-04-28), pages 1 - 54, XP002413737
- ANDREAS NILSSON: "Key Management with Trusted Platform Modules", 31 December 2006 (2006-12-31), XP055530259, Retrieved from the Internet <URL:https://www.nada.kth.se/utbildning/grukth/exjobb/rapportlistor/2006/rapporter06/nilsson_andreas_06049.pdf> [retrieved on 20181205]

## Description

### BACKGROUND OF THE DESCRIPTION

A system on chip (SOC) is an integrated circuit that integrates all components of a computer or other electronic system. These components include a central processing unit (CPU), memory, input/output (IO) ports and secondary storage, etc., which are all included on a single substrate or microchip. Additionally, SOCs enable the integration of third-party components via a standardized on-die interconnect protocol. However, the addition of such components may lead to security vulnerabilities.

For example, genuine hardware components of a SOC that are packaged by an original equipment manufacturer (OEM) may be replaced with counterfeit components by a middleman prior to reaching an end user. For instance, genuine hardware components may be replaced during transit or with external servicing. As a result, the end user may eventually realize that the quality of the received SOC product is not as expected, which leads to poor customer satisfaction.

### BRIEF DESCRIPTION OF THE DRAWINGS

So that the manner in which the above recited features of the present embodiment can be understood in detail, a more particular description of the embodiment, briefly summarized above, may be had by reference to embodiments, some of which are illustrated in the appended drawings. It is to be noted, however, that the appended drawings illustrate only typical embodiments of this embodiment and are therefore not to be considered limiting of its scope, for the embodiment may admit to other equally effective embodiments.
**Figure 1** illustrates one embodiment of a computing device.
**Figure 2** illustrates one embodiment of a platform.
**Figure 3** is a flow diagram illustrating one embodiment of SOC device supply chain flow.
**Figure 4** is a flow diagram illustrating one embodiment of a hardware integrity verification process.
**Figure 5** is a flow diagram illustrating one embodiment to handle hardware component replacement by legitimate user.
**Figure 6** illustrates one embodiment of a schematic diagram of an illustrative electronic computing device.

### DETAILED DESCRIPTION

In the following description, numerous specific details are set forth to provide a more thorough understanding of the present embodiment. However, it will be apparent to one of skill in the art that the present embodiment may be practiced without one or more of these specific details. In other instances, well-known features have not been described in order to avoid obscuring the present embodiment.

In embodiments, a mechanism is provided to verify integrity of hardware components within an SOC is described.

References to "one embodiment", "an embodiment", "example embodiment", "various embodiments", etc., indicate that the embodiment(s) so described may include particular features, structures, or characteristics, but not every embodiment necessarily includes the particular features, structures, or characteristics. Further, some embodiments may have some, all, or none of the features described for other embodiments.

In the following description and claims, the term "coupled" along with its derivatives, may be used. "Coupled" is used to indicate that two or more elements cooperate or interact with each other, but they may or may not have intervening physical or electrical components between them.

As used in the claims, unless otherwise specified, the use of the ordinal adjectives "first", "second", "third", etc., to describe a common element, merely indicate that different instances of like elements are being referred to and are not intended to imply that the elements so described must be in a given sequence, either temporally, spatially, in ranking, or in any other manner.

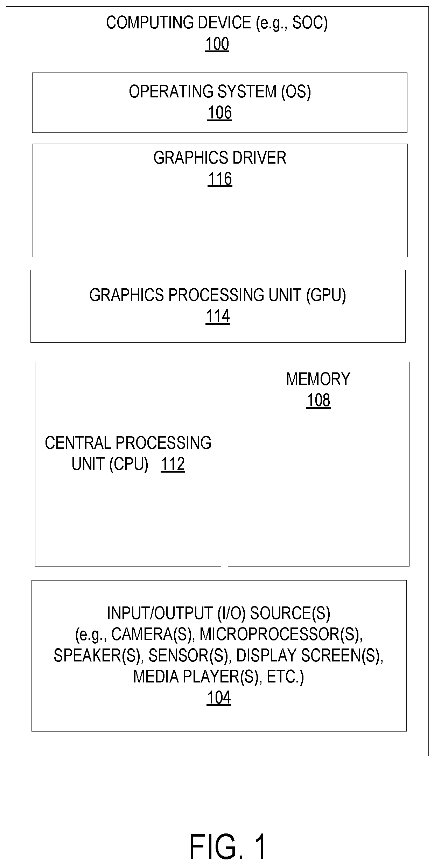

**Figure 1** illustrates one embodiment of a computing device 100. According to one embodiment, computing device 100 comprises a computer platform hosting an integrated circuit ("IC"), such as a system on a chip ("SoC" or "SOC"), integrating various hardware and/or software components of computing device 100 on a single chip. As illustrated, in one embodiment, computing device 100 may include any number and type of hardware and/or software components, such as (without limitation) graphics processing unit 114 ("GPU" or simply "graphics processor"), graphics driver 116 (also referred to as "GPU driver", "graphics driver logic", "driver logic", user-mode driver (UMD), UMD, user-mode driver framework (UMDF), UMDF, or simply "driver"), central processing unit 112 ("CPU" or simply "application processor"), memory 108, network devices, drivers, or the like, as well as input/output (I/O) sources 104, such as touchscreens, touch panels, touch pads, virtual or regular keyboards, virtual or regular mice, ports, connectors, etc. Computing device 100 may include operating system (OS) 106 serving as an interface between hardware and/or physical resources of computing device 100 and a user.

It is to be appreciated that a lesser or more equipped system than the example described above may be preferred for certain implementations. Therefore, the configuration of computing device 100 may vary from implementation to implementation depending upon numerous factors, such as price constraints, performance requirements, technological improvements, or other circumstances.

Embodiments may be implemented as any or a combination of: one or more microchips or integrated circuits interconnected using a parentboard, hardwired logic, software stored by a memory device and executed by a microprocessor, firmware, an application specific integrated circuit (ASIC), and/or a field programmable gate array (FPGA). The terms "logic", "module", "component", "engine", and "mechanism" may include, by way of example, software or hardware and/or a combination thereof, such as firmware.

Embodiments may be implemented using one or more memory chips, controllers, CPUs (Central Processing Unit), microchips or integrated circuits interconnected using a motherboard, an application specific integrated circuit (ASIC), and/or a field programmable gate array (FPGA). The term "logic" may include, by way of example, software or hardware and/or combinations of software and hardware.

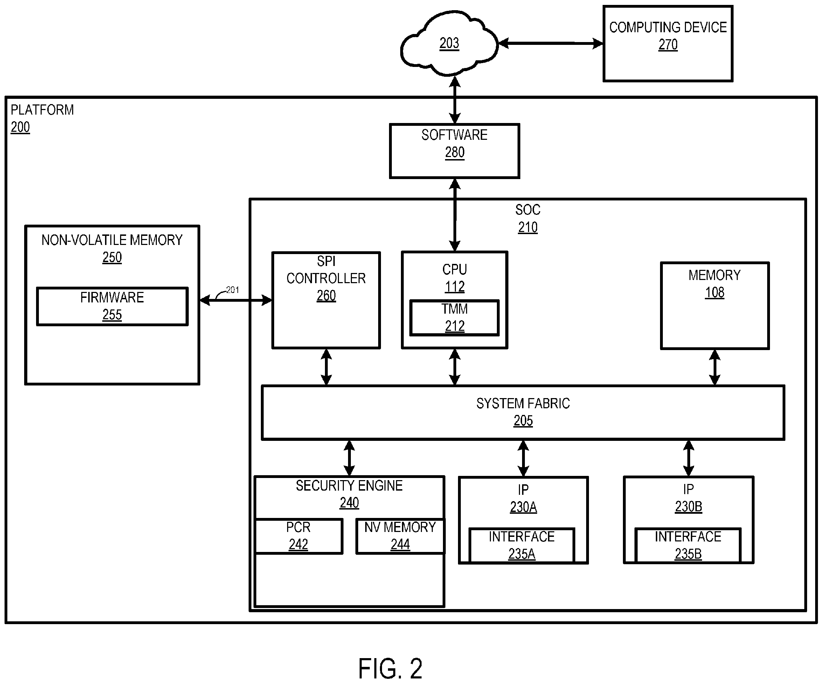

**Figure 2** illustrates one embodiment of a platform 200 including a SOC 210 similar to computing device 100 discussed above. As shown in **Figure 2****,** platform 200 includes SOC 210 communicatively coupled to one or more software components 280 via CPU 112. In a further embodiment, platform 200 may also be coupled to a computing device 270 via a cloud network 203. In this embodiment, computing device 270 comprises a cloud agent that is provided access to SOC 210 via software 280.

Additionally, SOC 210 includes other computing device components (e.g., memory 108) coupled via a system fabric 205. In one embodiment, system fabric 205 comprises an integrated on-chip system fabric (IOSF) to provide a standardized on-die interconnect protocol for coupling interconnect protocol (IP) agents 230 (e.g., IP blocks 230A and 230B) within SOC 210. In such an embodiment, the interconnect protocol provides a standardized interface to enable third parties to design logic such as IP agents to be incorporated in SOC 210.

According to embodiment, IP agents 230 may include general purpose processors (e.g., in-order or out-of-order cores), fixed function units, graphics processors, I/O controllers, display controllers, etc. In such an embodiment, each IP agent 230 includes a hardware interface 235 (e.g., 235A and 235B) to provide standardization to enable the IP agent 230 to communicate with SOC 210 components. For example, in an embodiment in which IP agent 230 is a third-party visual processing unit (VPU), interface 235 provides a standardization to enable the VPU to access memory 108 via fabric 205.

Further, SOC 210 is coupled to a non-volatile memory 250. Non-volatile memory 250 may be implemented as a Peripheral Component Interconnect Express (PCIe) storage drive, such as a solid-state drive (SSD) or Non-Volatile Memory Express (NVMe) drives. In one embodiment, non-volatile memory 250 is implemented to store the platform 200 firmware 255. In one embodiment, SOC 210 is coupled to non-volatile memory 250 via a serial peripheral interface (SPI) 201. In such an embodiment, SOC 210 includes SPI controller 260 coupled between SPI 201 and system fabric 205. In a further embodiment, SPI controller 260 is a flash controller implemented to control access to non-volatile memory 250 via SPI 201.

SOC 210 also includes a security engine 240 that performs various security operations (e.g., security processing, cryptographic functions, etc.) for SOC 210. In one embodiment, security engine 240 comprises an IP agent 230 that is implemented to perform the security operations. In such an embodiment, security engine 240 is a cryptographic processor that is implemented as a Trusted Platform Module (TPM), which operates as a root of trust (or platform ROT) to assure the integrity of hardware and software operating on platform 200. In such an embodiment, the ROT stores and reports measurements that are used for reporting and evaluating the current platform 200 configuration and for providing long-term protection of sensitive information. As used herein, a ROT is defined as a set of functions in a trusted computing module within a host that is always trusted by the host's operating system (OS). The ROT serves as separate compute engine controlling the trusted computing platform cryptographic processor, such as security engine 240, on platform 200.

As discussed above, SOC 210 components are vulnerable to counterfeit. Typically, hardware integrity protection is provided to an SOC at manufacturing, prior to supply chain flow. According to one embodiment, CPU 112 includes a trusted measurement module (TMM) 212 that is implemented to perform authentication to ensure the integrity of hardware components added to SOC 210. In such an embodiment, the properties of hardware components within SOC are used to compute ROT measurement values (or measurements). Device properties may include, for example, vendor identifier (ID), unique ID (e.g., serial or device ID), manufacturer ID, device capacity, device name, device type, install date etc., of hardware components included in SOC 210. In a further embodiment, the ROT measurements are included in a platform configuration registers (PCR) 242 within security engine 240 during hardware integrity verification.

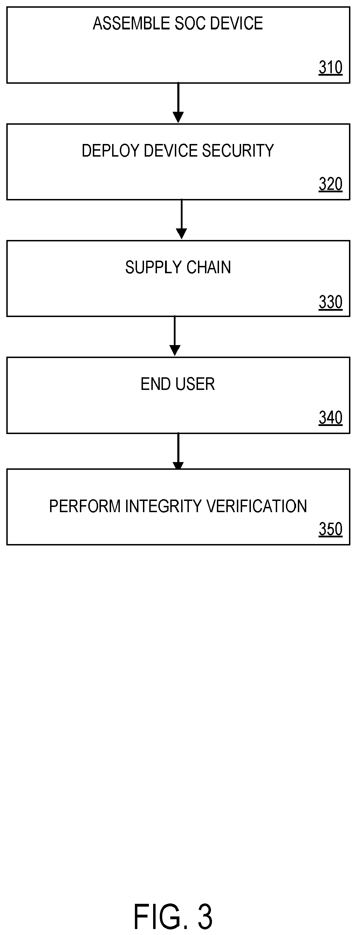

**Figure 3** is a flow diagram illustrating one embodiment of an SOC 210 supply chain flow. At processing block 310, the SOC device is assembled by an OEM from genuine hardware components. At processing block 320, security is deployed to SOC 210. In one embodiment, the security is deployed by generating an expected integrity (or golden) measurement and storing it in non-volatile memory 244 within security engine 240. In such an embodiment, the expected integrity measurement is generated by enumerating the hardware components within the device, retrieving the properties of the enumerated hardware components and deriving hash measurements from the retrieved properties. In one embodiment, the enumeration and hash derivations are performed by a mechanism controlled by an OEM.

In a further embodiment, the expected integrity measurement is deployed via a launch control policy (LCP). An LCP comprises a verification mechanism for a verified launch process and is used to determine whether a current platform configuration or an environment to be launched meets specified criteria. An LCP comprises an LCP policy and an LCP policy data file. The LCP Policy comprises a policy that takes a form of structure residing in non-volatile memory 244 within security engine 240. In one embodiment, the policy structure defines some of the policies and creates a linkage to an LCP policy data file. The LCP policy data file is structured to be a nested collection of lists and valid policy elements. As a result, an LCP element is generated for the expected integrity measurement.

According to one embodiment, an OEM generates an LCP element for the expected integrity measurement. Subsequently, security engine 240 receives and stores the expected integrity measurement in an internal non-volatile memory 244 for later hardware integrity verification. As used herein, the expected integrity measurement is an expected measurement used to verify the authenticity of the components within the hardware.

At processing block 330, SOC 210 proceeds through a supply chain of middlemen after packaging. At processing block 340, SOC 210 is received by an end user. Once received, the user may perform integrity verification using security engine 240, processing block 350. In one embodiment, TMM 212 may be configured to perform integrity verification during each boot of platform 200. However in other embodiments, TMM 212 may be configured to perform integrity verification based on user demand.

According to one embodiment, TMM 212when launched by CPU 112, enumerates hardware components within SOC 210, retrieves the properties of each component, generates a ROT hardware measurement (e.g., in a manner similar to the generation of the expected integrity measurement) and stores the ROT hardware measurement within platform configuration register (PCR) 242. The hardware integrity verification process is considered successful upon a determination that the derived ROT measurement matches with the expected integrity measurement stored in non-volatile memory 244. Upon a determination that there is not a match, one or more errors will be reported to the user and actions (e.g., a trusted execution reset) will be performed.

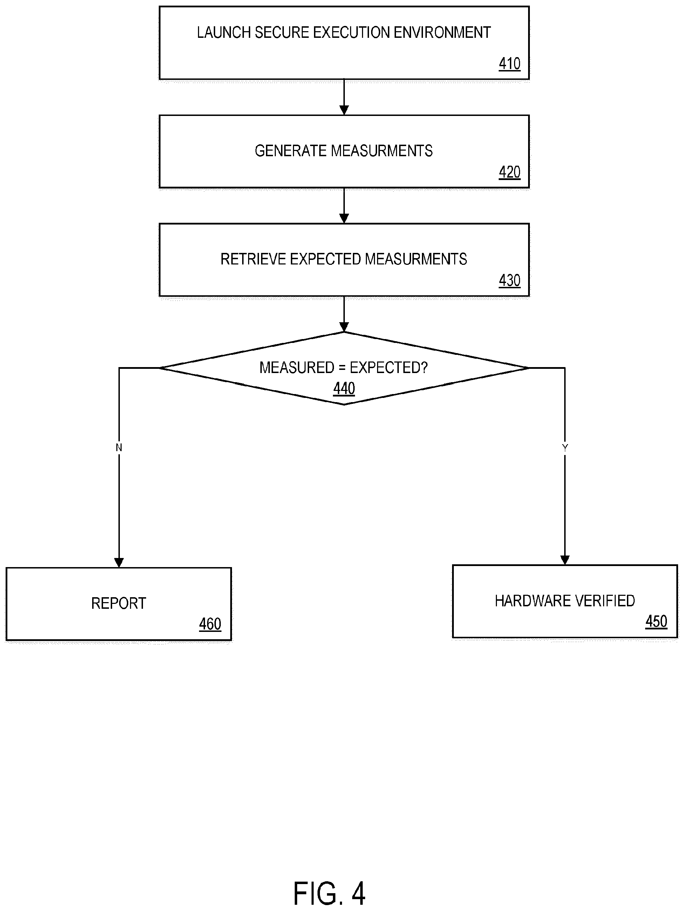

**Figure 4** is a flow diagram illustrating one embodiment of a hardware integrity verification process. At processing block 410, a secure execution environment is launched via security engine 240. At processing block 420, a ROT measurement is generated from the properties of each hardware component in the SOC. As discussed above, the derived measurement is stored in PCR 242. At processing block 430, the expected integrity measurement is retrieved from non-volatile memory 244. At decision block 440, a determination is made as to whether there is a match between the generated measurement and the expected integrity measurement. If so, the integrity of the hardware components within the SOC have been verified, processing block 450. Otherwise, an error is reported to the user, processing block 460.

According to one embodiment, TMM 212 may also perform integrity check of the hardware component replacements. In such an embodiment, TMM 212 verifies the integrity of one or more replacement components added to SOC 210 (e.g., a CPU replacement). Accordingly, TMM 212 detects that a hardware component has been replaced and prompts the user to acknowledge the replacement with a third-party server (e.g., computing device 270) associated with an OEM. In one embodiment, the TMM 212 detects the component replacement by determining that a live measurement does not match the expected measurement in the subsequent boot.

In one embodiment, computing device 270 triggers the hardware attestation process in SOC 210, which confirms that SOC 210 is suitable to perform the attestation process. In a further embodiment, the computing device 270 authenticates the user to confirm ownership of SOC 210. In this embodiment, authentication may be performed by computing device 270 transmitting a onetime password (OTP) to a registered mobile number associated with the user. Subsequently, a secure session is established between platform 200 and computing device 270.

In one embodiment, TMM 212 is invoked to compute an updated expected value that includes the replaced hardware component. In such an embodiment, an updated LCP policy element is generated (e.g., at OEM server), which is stored in non-volatile memory 244. In a further embodiment, the user is informed that the update is successful, and the secure session is terminated. During a subsequent bootup, TMM 212 is launched and performs the process discussed above with reference to **Figure 4****.**

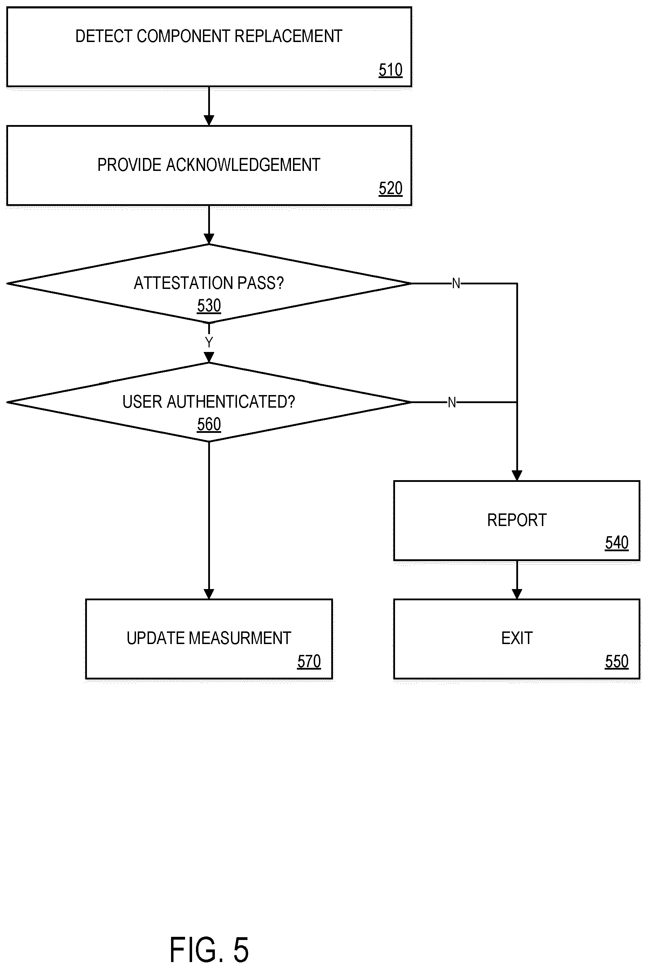

**Figure 5** is a flow diagram illustrating one embodiment to handle hardware component replacement by legitimate user. At processing block 510, component replacement is detected. At processing block 520, the user of platform 200 provides an acknowledgement of the replacement to the third-party server. Subsequently, an attestation process is performed to authenticate the SOC. At decision block 530, a determination is made as to whether the SOC attestation has passed. If not, an error is reported (processing block 540) and the process is exited (processing block 550).

Upon a determination at decision block 530 that the attestation has passed, a determination is made as to the user has been authenticated (e.g., via an OTP), decision block 560. If so, the expected integrity measurement is updated, processing block 570. Otherwise, control is returned to blocks 560 and 570, respectively, upon a determination that the user has not been authenticated.

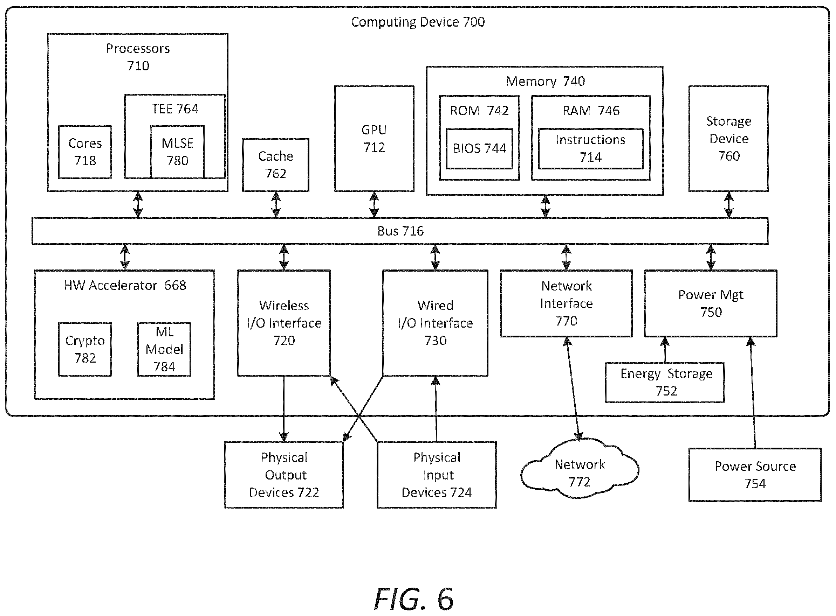

**Figure 6** illustrates one embodiment of a schematic diagram of an illustrative electronic computing device. In some embodiments, the computing device 700 includes one or more processors 710 including one or more processors cores 718 and a TEE 764, the TEE including a machine learning service enclave (MLSE) 780. In some embodiments, the computing device 700 includes a hardware accelerator 768, the hardware accelerator including a cryptographic engine 782 and a machine learning model 784. In some embodiments, the computing device is to provide enhanced protections against ML adversarial attacks, as provided in **Figures 1-5****.**

The computing device 700 may additionally include one or more of the following: cache 762, a graphical processing unit (GPU) 712 (which may be the hardware accelerator in some implementations), a wireless input/output (I/O) interface 720, a wired I/O interface 730, memory circuitry 740, power management circuitry 750, non-transitory storage device 760, and a network interface 770 for connection to a network 772. The following discussion provides a brief, general description of the components forming the illustrative computing device 700. Example, non-limiting computing devices 700 may include a desktop computing device, blade server device, workstation, or similar device or system.

In embodiments, the processor cores 718 are capable of executing machine-readable instruction sets 714, reading data and/or instruction sets 714 from one or more storage devices 760 and writing data to the one or more storage devices 760. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like.

The processor cores 718 may include any number of hardwired or configurable circuits, some or all of which may include programmable and/or configurable combinations of electronic components, semiconductor devices, and/or logic elements that are disposed partially or wholly in a PC, server, or other computing system capable of executing processor-readable instructions.

The computing device 700 includes a bus or similar communications link 716 that communicably couples and facilitates the exchange of information and/or data between various system components including the processor cores 718, the cache 762, the graphics processor circuitry 712, one or more wireless I/O interfaces 720, one or more wired I/O interfaces 730, one or more storage devices 760, and/or one or more network interfaces 770. The computing device 700 may be referred to in the singular herein, but this is not intended to limit the embodiments to a single computing device 700, since in certain embodiments, there may be more than one computing device 700 that incorporates, includes, or contains any number of communicably coupled, collocated, or remote networked circuits or devices.

The processor cores 718 may include any number, type, or combination of currently available or future developed devices capable of executing machine-readable instruction sets.

The processor cores 718 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in **Figure 6** are of conventional design. Consequently, such blocks need not be described in further detail herein, as they will be understood by those skilled in the relevant art. The bus 716 that interconnects at least some of the components of the computing device 700 may employ any currently available or future developed serial or parallel bus structures or architectures.

The system memory 740 may include read-only memory ("ROM") 742 and random-access memory ("RAM") 746. A portion of the ROM 742 may be used to store or otherwise retain a basic input/output system ("BIOS") 744. The BIOS 744 provides basic functionality to the computing device 700, for example by causing the processor cores 718 to load and/or execute one or more machine-readable instruction sets 714. In embodiments, at least some of the one or more machine-readable instruction sets 714 causes at least a portion of the processor cores 718 to provide, create, produce, transition, and/or function as a dedicated, specific, and particular machine, for example a word processing machine, a digital image acquisition machine, a media playing machine, a gaming system, a communications device, a smartphone, or similar.

The computing device 700 may include at least one wireless input/output (I/O) interface 720. The at least one wireless I/O interface 720 may be communicably coupled to one or more physical output devices 722 (tactile devices, video displays, audio output devices, hardcopy output devices, etc.). The at least one wireless I/O interface 720 may communicably couple to one or more physical input devices 724 (pointing devices, touchscreens, keyboards, tactile devices, etc.). The at least one wireless I/O interface 720 may include any currently available or future developed wireless I/O interface. Example wireless I/O interfaces include, but are not limited to: BLUETOOTH^{®}, near field communication (NFC), and similar.

The computing device 700 may include one or more wired input/output (I/O) interfaces 730. The at least one wired I/O interface 730 may be communicably coupled to one or more physical output devices 722 (tactile devices, video displays, audio output devices, hardcopy output devices, etc.). The at least one wired I/O interface 730 may be communicably coupled to one or more physical input devices 724 (pointing devices, touchscreens, keyboards, tactile devices, etc.). The wired I/O interface 730 may include any currently available or future developed I/O interface. Example wired I/O interfaces include but are not limited to: universal serial bus (USB), IEEE 1394 ("FireWire"), and similar.

The computing device 700 may include one or more communicably coupled, non-transitory, data storage devices 760. The data storage devices 760 may include one or more hard disk drives (HDDs) and/or one or more solid-state storage devices (SSDs). The one or more data storage devices 760 may include any current or future developed storage appliances, network storage devices, and/or systems. Non-limiting examples of such data storage devices 760 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more data storage devices 760 may include one or more removable storage devices, such as one or more flash drives, flash memories, flash storage units, or similar appliances or devices capable of communicable coupling to and decoupling from the computing device 700.

The one or more data storage devices 760 may include interfaces or controllers (not shown) communicatively coupling the respective storage device or system to the bus 716. The one or more data storage devices 760 may store, retain, or otherwise contain machine-readable instruction sets, data structures, program modules, data stores, databases, logical structures, and/or other data useful to the processor cores 718 and/or graphics processor circuitry 712 and/or one or more applications executed on or by the processor cores 718 and/or graphics processor circuitry 712. In some instances, one or more data storage devices 760 may be communicably coupled to the processor cores 718, for example via the bus 716 or via one or more wired communications interfaces 730 (e.g., Universal Serial Bus or USB); one or more wireless communications interfaces 720 (e.g., Bluetooth^{®}, Near Field Communication or NFC); and/or one or more network interfaces 770 (IEEE 802.3 or Ethernet, IEEE 802.11, or Wi-Fi^{®}, etc.).

Processor-readable instruction sets 714 and other programs, applications, logic sets, and/or modules may be stored in whole or in part in the system memory 740. Such instruction sets 714 may be transferred, in whole or in part, from the one or more data storage devices 760. The instruction sets 714 may be loaded, stored, or otherwise retained in system memory 740, in whole or in part, during execution by the processor cores 718 and/or graphics processor circuitry 712.

The computing device 700 may include power management circuitry 750 that controls one or more operational aspects of the energy storage device 752. In embodiments, the energy storage device 752 may include one or more primary (i.e., non-rechargeable) or secondary (i.e., rechargeable) batteries or similar energy storage devices. In embodiments, the energy storage device 752 may include one or more supercapacitors or ultracapacitors. In embodiments, the power management circuitry 750 may alter, adjust, or control the flow of energy from an external power source 754 to the energy storage device 752 and/or to the computing device 700. The power source 754 may include, but is not limited to, a solar power system, a commercial electric grid, a portable generator, an external energy storage device, or any combination thereof.

For convenience, the processor cores 718, the graphics processor circuitry 712, the wireless I/O interface 720, the wired I/O interface 730, the storage device 760, and the network interface 770 are illustrated as communicatively coupled to each other via the bus 716, thereby providing connectivity between the above-described components. In alternative embodiments, the above-described components may be communicatively coupled in a different manner than illustrated in **Figure 6****.** For example, one or more of the above-described components may be directly coupled to other components, or may be coupled to each other, via one or more intermediary components (not shown). In another example, one or more of the above-described components may be integrated into the processor cores 718 and/or the graphics processor circuitry 712. In some embodiments, all or a portion of the bus 716 may be omitted and the components are coupled directly to each other using suitable wired or wireless connections.

Embodiments may be provided, for example, as a computer program product which may include one or more transitory or non-transitory machine-readable storage media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

The embodiment has been described above with reference to specific embodiments. Persons skilled in the art, however, will understand that various modifications and changes may be made thereto without departing from the scope of the embodiment as set forth in the appended claims. The foregoing description and drawings are, accordingly, to be regarded in an illustrative rather than a restrictive sense.

## Claims

1. An arrangement comprising an apparatus and a third-party server, the apparatus comprising:
a system on chip (SOC) (210), including:
a plurality of hardware components;
a cryptographic processor (240) comprising a non-volatile memory (244) to store an expected integrity measurement; and
a processor (112) to
retrieve properties of the plurality of hardware components and generate a root of trust (ROT) measurement based on the properties of the plurality of hardware components,
launch a secure execution environment to verify integrity of the plurality of hardware components using an expected integrity measurement generated based on the properties of the plurality of hardware components upon a determination that the expected integrity measurement matches the ROT measurement,
detect that a first of the plurality of hardware components has been replaced upon a determination that the expected integrity measurement does not match the ROT measurement,
interface with a third-party server for an acknowledgement of the replacement of the first hardware component by a user of the SOC (210) and attest authentication of the SOC (210),
wherein the third-party server is configured to authenticate the user of the SOC (210) and wherein the cryptographic processor (240) is configured to, in reaction to a successful authentication of the user by the third-party server and an acknowledgement of the replacement of the first hardware component by the user, compute an updated expected integrity measurement including the replaced first hardware component and to store the updated expected integrity measurement in the non-volatile memory (244) upon attestation of the authentication of the SOC (210).

2. The arrangement of claim 1, wherein the cryptographic processor (240) further comprises a platform configuration register (PCR) to store the ROT measurement.

3. The arrangement of claim 2, wherein the processor (112) to retrieve the expected integrity measurement from the non-volatile memory (244) and the ROT measurement from the PCR.

4. The arrangement of claim 3, wherein the processor (112) to determine whether the expected integrity measurement matches the ROT measurement.

5. The arrangement of claim 4, wherein the processor (112) to report an error upon a determination that the expected integrity measurement does not match the ROT measurement.

6. A method comprising:
retrieving properties of a plurality of hardware components;
generating a root of trust (ROT) measurement based on the properties of the plurality of hardware components included in a system on chip (SOC);
storing an expected integrity measurement in a non-volatile memory (244) of the SOC (210);
determining whether the expected integrity measurement matches the ROT measurement;
verifying integrity of the plurality of hardware components upon a determination that the expected integrity measurement matches the ROT measurement;
detecting that a first of the plurality of hardware components has been replaced upon a determination that the expected integrity measurement does not match the ROT measurement,
interfacing with a third-party server for an acknowledgement of the replacement of the first hardware component by a user of the SOC (210) and attest authentication of the SOC (210);
wherein the third-party server authenticates the user of the SOC (210) and the cryptographic processor (240), in reaction to a successful authentication of the user by the third-party server and an acknowledgement of the replacement of the first hardware component by the user, computes an updated expected integrity measurement including the replaced first hardware component; and
storing the updated expected integrity measurement in the non-volatile memory (244) upon attestation of the authentication of the SOC (210).

7. The method of claim 6, further comprising retrieving the properties of the plurality of hardware components prior to generating the ROT measurement based on the properties of the plurality of hardware components.

8. The method of claim 7, further comprising reporting an error upon a determination that the expected integrity measurement does not match the ROT measurement.

9. At least one computer readable medium having instructions stored thereon, which when executed by one or more processors (112), cause the processors (112) to perform the method of claims 6-8.

## Patentansprüche

1. Anordnung, die eine Vorrichtung und einen Drittparteiserver umfasst, wobei die Vorrichtung umfasst:
ein Ein-Chip-System (SOC) (210), das aufweist:
eine Mehrzahl von Hardwarekomponenten;
einen kryptografischen Prozessor (240), der einen nicht-flüchtigen Speicher (244) umfasst, um eine erwartete Integritätsmessung zu speichern; und
einen Prozessor (112), der geeignet ist zum:
Abrufen von Eigenschaften der Mehrzahl von Hardwarekomponenten und Erzeugen einer Vertrauensankermessung (ROT-Messung) basierend auf den Eigenschaften der Mehrzahl von Hardwarekomponenten;
Starten einer sicheren Ausführungsumgebung, um eine Integrität der Mehrzahl von Hardwarekomponenten unter Verwendung einer erwarteten Integritätsmessung zu verifizieren, die basierend auf den Eigenschaften der Mehrzahl von Hardwarekomponenten nach einem Ermitteln erzeugt wird, dass die erwartete Integritätsmessung mit der ROT-Messung übereinstimmt; Erkennen, dass eine erste aus der Mehrzahl von Hardwarekomponenten nach einem Ermitteln, dass die erwartete Integritätsmessung nicht mit der ROT-Messung übereinstimmt, ersetzt wurde; Koppeln über eine Schnittstelle mit einem Drittparteiserver für eine Bestätigung des Ersetzens der ersten Hardwarekomponente durch einen Benutzer des SOC (210) und Attestieren einer Authentifizierung des SOC (210),
wobei der Drittparteiserver konfiguriert ist, um den Benutzer des SOC (210) zu authentifizieren, und wobei der kryptografische Prozessor (240) konfiguriert ist, um als Reaktion auf eine erfolgreiche Authentifizierung des Benutzers durch den Drittparteiserver und eine Bestätigung des Ersetzens der ersten Hardwarekomponente durch den Benutzer, eine aktualisierte erwartete Integritätsmessung zu berechnen, welche die ersetzte erste Hardwarekomponente aufweist, und um die aktualisierte erwartete Integritätsmessung nach einer Attestierung der Authentifizierung des SOC (210) in dem nicht-flüchtigen Speicher (244) zu speichern.

2. Anordnung nach Anspruch 1, wobei der kryptografische Prozessor (240) ferner ein Plattformkonfigurationsregister (PCR) zum Speichern der ROT-Messung umfasst.

3. Anordnung nach Anspruch 2, wobei der Prozessor (112) geeignet ist, um die erwartete Integritätsmessung aus dem nicht-flüchtigen Speicher (244) und die ROT-Messung aus dem PCR abzurufen.

4. Anordnung nach Anspruch 3, wobei der Prozessor (112) geeignet ist, um zu ermitteln, ob die erwartete Integritätsmessung mit der ROT-Messung übereinstimmt.

5. Anordnung nach Anspruch 4, wobei der Prozessor (112) geeignet ist, um bei einem Ermitteln einen Fehler zu melden, dass die erwartete Integritätsmessung nicht mit der ROT-Messung übereinstimmt.

6. Verfahren, umfassend:
Abrufen von Eigenschaften von einer Mehrzahl von Hardwarekomponenten;
Erzeugen einer Vertrauensankermessung (ROT-Messung) basierend auf den Eigenschaften der Mehrzahl von Hardwarekomponenten, wobei ein Ein-Chip-System (SOC) die Mehrzahl von Hardwarekomponenten aufweist;
Speichern einer erwarteten Integritätsmessung in einem nicht-flüchtigen Speicher (244) des SOC (210);
Ermitteln, ob die erwartete Integritätsmessung mit der ROT-Messung übereinstimmt;
Verifizieren einer Integrität der Mehrzahl von Hardwarekomponenten nach einem Ermitteln, dass die erwartete Integritätsmessung mit der ROT-Messung übereinstimmt;
Erkennen, dass eine erste aus der Mehrzahl von Hardwarekomponenten nach einem Ermitteln, dass die erwartete Integritätsmessung nicht mit der ROT-Messung übereinstimmt, ersetzt wurde,
Koppeln über eine Schnittstelle mit einem Drittparteiserver für eine Bestätigung des Ersetzens der ersten Hardwarekomponente durch einen Benutzer des SOC (210) und Attestieren einer Authentifizierung des SOC (210);
wobei der Drittparteiserver den Benutzer des SOC (210) authentifiziert und wobei der kryptografische Prozessor (240), als Reaktion auf eine erfolgreiche Authentifizierung des Benutzers durch den Drittparteiserver und eine Bestätigung des Ersetzens der ersten Hardwarekomponente durch den Benutzer, eine aktualisierte erwartete Integritätsmessung berechnet, welche die ersetzte erste Hardwarekomponente aufweist; und
Speichern der aktualisierten erwarteten Integritätsmessung in dem nicht-flüchtigen Speicher (244) nach einer Attestierung der Authentifizierung des SOC (210).

7. Verfahren nach Anspruch 6, das ferner ein Abrufen der Eigenschaften der Mehrzahl von Hardwarekomponenten vor dem Erzeugen der ROT-Messung basierend auf den Eigenschaften der Mehrzahl von Hardwarekomponenten umfasst.

8. Verfahren nach Anspruch 7, das ferner ein Melden eines Fehlers nach einem Ermitteln umfasst, dass die erwartete Integritätsmessung nicht mit der ROT-Messung übereinstimmt.

9. Mindestens ein computerlesbares Medium, das Anweisungen aufweist, die darin gespeichert sind und die, wenn sie von einem oder mehreren Prozessoren (112) ausgeführt werden, die Prozessoren (112) veranlassen, das Verfahren nach einem der Ansprüche 6 bis 8 durchzuführen.

## Revendications

1. Agencement comprenant un appareil et un serveur tiers, l'appareil comprenant :
un système sur puce (SOC) (210), comportant :
une pluralité de composants matériels ;
un processeur cryptographique (240) comprenant une mémoire non volatile (244) destinée à stocker une mesure d'intégrité attendue ; et
un processeur (112) destiné à
récupérer des propriétés de la pluralité de composants matériels et générer une mesure de racine de confiance (ROT) sur la base des propriétés de la pluralité de composants matériels, lancer un environnement d'exécution sécurisé afin de vérifier l'intégrité de la pluralité de composants matériels au moyen d'une mesure d'intégrité attendue générée sur la base des propriétés de la pluralité de composants matériels lorsqu'il est déterminé que la mesure d'intégrité attendue correspond à la mesure de ROT, détecter qu'un premier composant matériel de la pluralité de composants matériels a été remplacé lorsqu'il est déterminé que la mesure d'intégrité attendue ne correspond pas à la mesure de ROT, s'interfacer avec un serveur tiers en vue d'un acquittement, par un utilisateur du SOC (210), du remplacement du premier composant matériel, et attester l'authentification du SOC (210),
le serveur tiers étant configuré pour authentifier l'utilisateur du SOC (210) et le processeur cryptographique (240) étant configuré pour, en réaction à une authentification réussie de l'utilisateur par le serveur tiers et à un acquittement, par l'utilisateur, du remplacement du premier composant matériel, calculer une mesure d'intégrité attendue mise à jour comportant le premier composant matériel remplacé et stocker la mesure d'intégrité attendue mise à jour dans la mémoire non volatile (244) lors de l'attestation de l'authentification du SOC (210).

2. Agencement selon la revendication 1, dans lequel le processeur cryptographique (240) comprend en outre un registre de configuration de plate-forme (PCR) destiné à stocker la mesure de ROT.

3. Agencement selon la revendication 2, dans lequel le processeur (112) est destiné à récupérer la mesure d'intégrité attendue depuis la mémoire non volatile (244) et la mesure de ROT depuis le PCR.

4. Agencement selon la revendication 3, dans lequel le processeur (112) est destiné à déterminer si la mesure d'intégrité attendue correspond à la mesure de ROT.

5. Agencement selon la revendication 4, dans lequel le processeur (112) est destiné à signaler une erreur lorsqu'il est déterminé que la mesure d'intégrité attendue ne correspond pas à la mesure de ROT.

6. Procédé comprenant :
la récupération de propriétés d'une pluralité de composants matériels ;
la génération d'une mesure de racine de confiance (ROT) sur la base des propriétés de la pluralité de composants matériels compris dans un système sur puce (SOC) ;
le stockage d'une mesure d'intégrité attendue dans une mémoire non volatile (244) du SOC (210) ;
la détermination si la mesure d'intégrité attendue correspond à la mesure de ROT ;
la vérification de l'intégrité de la pluralité de composants matériels lorsqu'il est déterminé que la mesure d'intégrité attendue correspond à la mesure de ROT ;
la détection qu'un premier composant matériel de la pluralité de composants matériels a été remplacé lorsqu'il est déterminé que la mesure d'intégrité attendue ne correspond pas à la mesure de ROT ;
l'interfaçage avec un serveur tiers en vue d'un acquittement, par un utilisateur du SOC (210), du remplacement du premier composant matériel, et l'attestation de l'authentification du SOC (210) ;
le serveur tiers authentifiant l'utilisateur du SOC (210) et le processeur cryptographique (240), en réaction à une authentification réussie de l'utilisateur par le serveur tiers et à un acquittement, par l'utilisateur, du remplacement du premier composant matériel, calculant une mesure d'intégrité attendue mise à jour comportant le premier composant matériel remplacé ; et
le stockage de la mesure d'intégrité attendue mise à jour dans la mémoire non volatile (244) lors de l'attestation de l'authentification du SOC (210).

7. Procédé selon la revendication 6, comprenant en outre la récupération des propriétés de la pluralité de composants matériels avant la génération de la mesure de ROT sur la base des propriétés de la pluralité de composants matériels.

8. Procédé selon la revendication 7, comprenant en outre le signalement d'une erreur lorsqu'il est déterminé que la mesure d'intégrité attendue ne correspond pas à la mesure de ROT.

9. Au moins un support lisible par ordinateur sur lequel sont stockées des instructions qui, lorsqu'elles sont exécutées par un ou plusieurs processeurs (112), amènent les processeurs (112) à réaliser le procédé selon les revendications 6 à 8.
